# EUROPÄISCHE PATENTSCHRIFT

(11) **EP 1 475 573 B1**
(45) Veröffentlichungstag und Bekanntmachung des Hinweises auf die Patenterteilung: **03.06.2009**
(21) Anmeldenummer: 04008977.3
(22) Anmeldetag: 15.04.2004
(51) Int. Cl.: F24F 5/00

(54) **Kühldecke bzw. Kühlsegel mit Speicherfähigkeit**
Cooled ceiling or refrigerated stand having storage capabilitiy
Plafond réfrigérant ou meuble frigorifique avec capacité de stockage

(30) Priorität: 07.05.2003 DE 10320365
(43) Veröffentlichungstag der Anmeldung: 10.11.2004
(73) Patentinhaber: Maschinenfabrik Georg Kiefer GmbH, 70469 Stuttgart (DE)
(72) Erfinder: Nawrat, Uwe, 70567 Stuttgart (DE)
(74) Vertreter: Rögner, Jürgen

(56) Entgegenhaltungen:
- EP-A- 0 552 690
- AT-B- 221 758
- DE-A1- 3 932 972
- DE-U1- 29 913 730
- US-A- 2 988 980

## Beschreibung

Die Erfindung betrifft eine Kühldecke bzw. ein Kühlsegel mit einer abgehängten Decken- bzw. Segel-Flächenkonstruktion und mit einer Kühlmediumführung oberhalb der Flächenkonstruktion. Bei solchen Kühldecken bzw. Kühlsegeln (siehe z.B.Patentdokument EP-A-0 552 690) gibt die im Raum nach oben strömende warme Luft ihre Wärmeenergie an das Material der Flächenkonstruktion ab, welches wiederum durch das Kühlmedium abgekühlt wird, das oberhalb der Flächenkonstruktion geführt wird. Hierdurch wird eine Wärmeabfuhr aus dem Raum erreicht. Nachteilig bei dieser Grundkonstruktion wirkt sich die Tatsache aus, dass die Bauteile nur in sehr geringem Umfang dazu in der Lage sind, Wärme oder Kälte zu speichern. Besonders die Kältespeicherung ist für Kühldecken sehr vorteilhaft. Sie eröffnet die Möglichkeit, Kühlleistungsspitzen zu speichern bzw. zu egalisieren und den Energieaufwand für die Kühlung insgesamt zu minimieren. Ein Speichersystem ist beispielsweise aus der DE 196 09 641 C2 bekannt, die eine sogenannte Betonkernkühlung offenbart, bei der Zuluft durch Rohre in einer Betondecke geführt wird. Nachteiligerweise sind solche Systeme mit Betondecken kaum oder nur sehr aufwändig nachrüstbar bzw. umbaufähig.

Es ist die Aufgabe der vorliegenden Erfindung eine Kühldecke bzw. ein Kühlsegel zur Verfügung zu stellen, welches dazu in der Lage ist durch Zwischenspeicherung der Kühllast und Nutzung der freien Kühlung wesentliche Energieeinsparungen zu ermöglichen.

Diese Aufgabe wird erfindungsgemäß durch den Gegenstand des Patentanspruchs 1 und insbesondere durch dessen kennzeichnende Merkmale gelöst. Die Unteransprüche definieren vorteilhafte Ausführungsformen der Erfindung.

Gemäß der vorliegenden Erfindung wird an oder in der Flächenkonstruktion ein Phasenwechselmaterial angeordnet, und es ist ein Kanalsystem vorgesehen, über welches der Wärmeübergang zum und vom Phasenwechselmaterial durch die Kühldecke bzw. das Kühlsegel stattfindet. Hierdurch bieten sich nunmehr in zweierlei Hinsicht Vorteile. Einerseits führt die Speicherfähigkeit, die durch das Phasenwechselmaterial bereitgestellt wird, zu enormen Energieeinsparungen, da niedrige Außenlufttemperaturen zu geeigneten Zeiten zur Abkühlung der aufgenommenen Speicherwärme verwendet werden kann. Bei Bedarf kann beispielsweise die erfindungsgemäße Kühldecke bzw. das erfindungsgemäße Kühlsegel in den frühen Morgenstunden über kalte Zuluft (Außenluft) "entladen" werden. Raumwärme kann verwendet werden, um das Kühlmedium zu erwärmen und Spitzenlasten können durch die Speicherfähigkeit des Phasenwechselmaterials gepuffert werden.

Ein Phasenwechselmaterial eignet sich besonders gut als Speichermedium, weil schon im Phasenwechsel sehr hohe Energiemengen aufgenommen bzw. abgegeben werden, ohne dass die Temperatur des Materials sich dabei wesentlich ändert. Ein weiterer Vorteil entsteht durch das Kanalsystem, welches einerseits das Phasenwechselmaterial kanalisiert, d. h. an den richtigen Stellen vorteilhaft verteilt, andererseits aber als wärmeleitfähiges Material auch dafür sorgt, dass der Wärmeübergang durch die Kühldecke bzw. das Kühlsegel verbessert und gesteuert werden kann.

Bei einer bevorzugten Ausführungsform der Erfindung ist das Phasenwechselmaterial über der Flächenkonstruktion in den Zwischenräumen eines unteren Kanalsystems angeordnet, das auf der Flächenkonstruktion aufliegt. Hierbei besteht die Möglichkeit, oberhalb des unteren Kanalsystems noch ein oberes Kanalsystem anzuordnen, das Wärmeenergie zwischen dem Phasenwechselmaterial und dem Kühlmedium in der Kühlmediumführung ableitet. Das obere bzw. das untere Kanalsystem können aus kanalbildenden Plattenanordnungen aufgebaut sein, vorzugsweise aus einem gut wärmeleitenden Material.

Gemäß einer anderen Ausführungsform der Erfindung ist das Phasenwechselmaterial in der Flächenkonstruktion in Zwischenräumen eines inneren Kanalsystems angeordnet. Hierbei können untere Zwischenräume des inneren Kanalsystems das Phasenwechselmaterial aufnehmen, während obere Zwischenräume Strömungsverbindungen und Wärmeleitungsverbindungen für das Kühlmedium in der Kühlmediumführung aufweisen. Eine solche Ausführungsform kann so umgesetzt werden, dass die Flächenkonstruktion in Sandwichplatten-Bauweise ausgeführt wird, wobei auf einer Seite das Phasenwechselmaterial aufgenommen wird, während auf der anderen Seite Strömungskanäle für das Kühlmedium in der Kühlmediumführung ausgebildet werden. Zusätzlich ist es möglich, an der Oberseite der Flächenkonstruktion Durchlassöffnungen anzuordnen um den Wärmeaustausch mit der Kühlmediumführung zu verbessern.

Auch bei der Ausführungsform, bei der das Phasenwechselmaterial in Zwischenräumen eines inneren Kanalsystems der Flächenkonstruktion angeordnet ist, ist es möglich, oberhalb der Flächenkonstruktion zusätzlich ein oberes Kanalsystem anzuordnen, das Wärmeenergie zwischen der Flächenkonstruktion und dem Kühlmedium in der Kühlmediumführung ableitet, wobei auch hier das Kanalsystem aus einem wärmeleitenden Material, insbesondere mit einer hohen Wärmeleitfähigkeit besteht. Es können beispielsweise Metall- bzw. Blechplatten verwendet werden. In seinem oberen Teil dient ein solches oberes Kanalsystem auch der Führung des Kühlmediums.

Gemäß einer weiteren bevorzugten Ausgestaltung sind die Kühlmediumführung und die Anordnung zur Aufnahme des Phasenwechselmaterials separat vorgesehen und können insbesondere über Halteeinrichtungen verbunden werden, wobei aus mehreren Platten mit Phasenwechselmaterial eine Kassettendecke aufgebaut wird.

Das Kühlmedium kann, je nach geeignetem Anwendungsfall Wasser oder Luft sein. Wenn das Kühlmedium Luft ist, ist es von Vorteil, dass eine Zulufteinbringung in den Raum unterhalb der Decke bzw. des Segels gemäß einem Quellluftsystem in das Zuluftsystem integriert ist oder angeschlossen werden kann.

Die Erfindung wird im Weiteren anhand von Ausführungsformen und mit Hilfe der beiliegenden Zeichnungen näher erläutert. Es zeigen:
- Figur 1: einen schematischen Querschnitt durch ein Kühldeckensystem gemäß der vorliegenden Erfindung mit auf der Flächenkonstruktion angeordnetem Phasenwechselmaterial; und
- Figur 2: einen schematischen Querschnitt durch ein Kühlsegelsystem gemäß der vorliegenden Erfindung mit einem Phasenwechselmaterial innerhalb der unteren Zwischenräume von Sandwichplatten, welche die Flächenkonstruktion bilden.

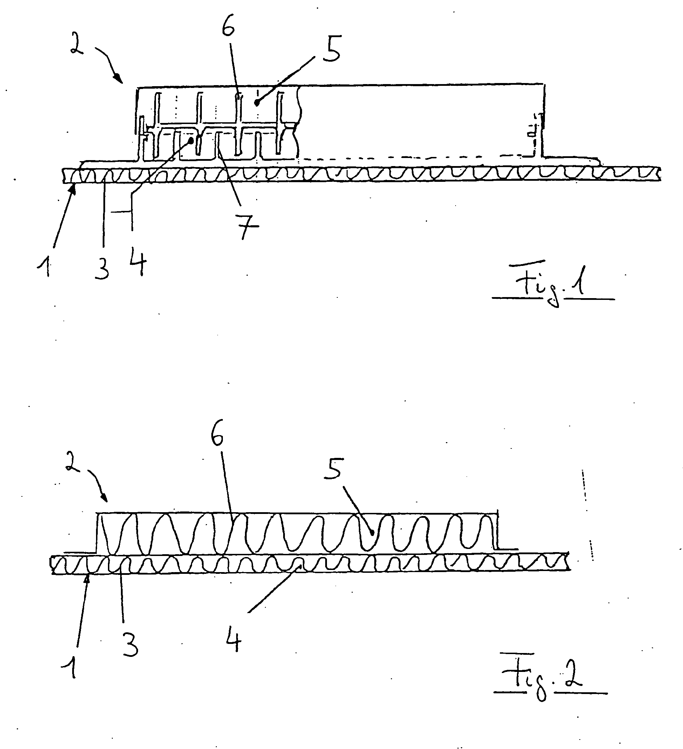

Der in Figur 1 gezeigte, schematische Querschnitt einer erfindungsgemäßen Kühldecke zeigt eine untere Flächenkonstruktion 1, die als Raumdecke dient. Die Flächenkonstruktion ist in Sandwichplatten-Bauweise ausgeführt, d. h. sie weist ein inneres Kanalsystem 3 auf, das bei dieser Ausführungsform zwar gut wärmeleitend sein soll, jedoch nicht unbedingt mit einem besonderen Material zu füllen ist, da die entsprechende Speichermaterial-Anordnung oberhalb der Flächenkonstruktion 1 aufgebaut ist. Diese Anordnung besteht aus einem unteren Kanalsystem 7, und in den Kanälen, die durch dieses untere Kanalsystem 7 ausgebildet werden, ist das Phasenwechselmaterial angeordnet, wie mit dem Bezugszeichen 4 angedeutet. Oberhalb des unteren Kanalsystems befindet sich ein oberes Kanalsystem 6, das gitterartig ausgebildet ist, und dessen unten abstehende Fortsätze in das Phasenwechselmaterial 4 eintauchen. Die oberen Fortsätze des Kanalsystems 6 befinden sich in dem Bereich der Zuluftführung 2, der von dem Kühlmedium, hier Kühlluft 5, durchströmt wird. Das untere Kanalsystem 7 sowie das obere Kanalsystem 6 bestehen aus einem Material, das sehr gut wärmeleitend ist und einen hohen Wärmeübergangskoeffizienten aufweist. Somit kann die Wärme, die aus der von unten an der Flächenkonstruktion 1 ankommenden warmen Luft über die Flächenkonstruktion 1 und das Sandwich-Kanalmaterial 3 herausgenommen wird, geeignet über das untere Kanalsystem 7 in das Phasenwechselmaterial 4 abgeleitet und in diesem auch gespeichert werden. Über das obere Kanalsystem 6 ist dann eine Ableitung der Wärme an das Kühlmedium 5 im Führungssystem 2 möglich.

Eine Ausführungsform als Kühlsegel ist in Figur 2 gezeigt. Auch hier ist eine Flächenkonstruktion 1 vorgesehen, welche in Sandwichplatten-Bauweise vorliegt, wodurch ein Kanalsystem 3 ausgebildet wird. Bei der Ausführungsform nach Figur 2 ist aber das Phasenwechselmaterial 4 in den unteren Zwischenräumen des Kanalsystems 3 angeordnet, und es kann somit direkt die durch die Raumluftanströmung bereitgestellte Wärme an der Unterseite der Flächenkonstruktion 1 aufnehmen und hier erfindungsgemäß die Speicherfähigkeit bereitstellen. Bei einer weiteren, vorteilhaften Ausführungsform können je nach gewünschter Speicherkapazität sowohl die oberen, als auch die unteren Zwischenräume des Kanalsystems 3 mit dem Phasenwechselmaterial gefüllt sein.

Oberhalb der Flächenkonstruktion 1 ist wiederum eine Kühlmediumführung 2 vorgesehen, wobei das Kühlmedium 5 in den Zwischenräumen des oberen Kanalsystems 6 strömt und damit sowohl aus dem Kanalsystem 6 als auch von der oberen Oberfläche der Flächenkonstruktion 1 Wärme aufnimmt und ableitet. Auch für diesen Fall ist es von Vorteil, wenn das Material der Kanalsysteme 3 und 6 gut wärmeleitend ist und einen hohen Wärmeübergangskoeffizienten aufweist. Ferner können auf der oberen Oberfläche der Flächenkonstruktion 1, d. h. auf der Oberseite der Sandwichplatten im Bereich des Kühlmediums 2 Schlitze oder Löcher vorgesehen sein, um das Kühlmedium über Verteiler- oder Sammelkästen durch die Sandwichplatte mäanderförmig zu führen.

## Patentansprüche

1. Kühldecke bzw. Kühlsegel mit einer abgehängten Decken- bzw. Segel-Flächenkonstruktion (1) und mit einer Kühlmediumführung (2) oberhalb der Flächenkonstruktion (1), **dadurch gekennzeichnet, dass** an oder in der Flächenkonstruktion (1) ein Phasenwechselmaterial (4) angeordnet ist, und dass ein Kanalsystem (3, 6, 7) vorgesehen ist, über welches der Wärmeübergang zum und vom Phasenwechselmaterial (4) durch die Kühldecke bzw. das Kühlsegel stattfindet.

2. Kühldecke bzw. Kühlsegel nach Anspruch 1, **dadurch gekennzeichnet, dass** das Phasenwechselmaterial (4) über der Flächenkonstruktion (1) in den Zwischenräumen eines unteren Kanalsystems (7) angeordnet ist, das auf der Flächenkonstruktion (1) aufliegt.

3. Kühldecke bzw. Kühlsegel nach Anspruch 2, **dadurch gekennzeichnet, dass** oberhalb der unteren Kanalsystems (7) ein oberes Kanalsystem (6) angeordnet ist, das Wärmeenergie zwischen dem Phasenwechselmaterial (4) und dem Kühlmedium in der Kühlmediumführung (2) ableitet.

4. Kühldecke bzw. Kühlsegel nach Anspruch 2 oder 3, **dadurch gekennzeichnet, dass** das obere und/oder das untere Kanalsystem aus kanalbildenden Plattenanordnungen aufgebaut ist.

5. Kühldecke bzw. Kühlsegel nach Anspruch 1, **dadurch gekennzeichnet, dass** das Phasenwechselmaterial (4) in der Flächenkonstruktion (1) in Zwischenräumen eines inneren Kanalsystems (3) angeordnet ist.

6. Kühldecke bzw. Kühlsegel nach Anspruch 5, **dadurch gekennzeichnet, dass** untere Zwischenräume des inneren Kanalsystems (3) das Phasenwechselmaterial (4) aufnehmen, während obere Zwischenräume Strömungsverbindungen für das Kühlmedium in der Kühlmediumführung (2) aufweisen.

7. Kühldecke bzw. Kühlsegel nach Anspruch 5 oder 6, **dadurch gekennzeichnet, dass** die Flächenkonstruktion (1) in Sandwichplatten-Bauweise ausgeführt ist, wobei auf einer Seite das Phasenwechselmaterial (4) aufgenommen wird, während auf der anderen Seite Strömungskanäle für das Kühlmedium in der Kühlmediumführung (2) ausgebildet werden.

8. Kühldecke bzw. Kühlsegel nach einem der Ansprüche 5 bis 7, **dadurch gekennzeichnet, dass** an der Oberseite der Flächenkonstruktion (1) Durchlassöffnungen angeordnet sind.

9. Kühldecke bzw. Kühlsegel nach einem der Ansprüche 5 bis 8, **dadurch gekennzeichnet, dass** oberhalb der Flächenkonstruktion (1) ein oberes Kanalsystem (6) angeordnet ist, das Wärmeenergie zwischen der Flächenkonstruktion (1) und dem Kühlmedium in der Kühlmediumführung (2) ableitet.

10. Kühldecke bzw. Kühlsegel nach einem der Ansprüche 1 bis 9, **dadurch gekennzeichnet, dass** die Kühlmediumführung (2) und die Anordnung zur Aufnahme des Phasenwechselmaterials (4) separat vorgesehen sind und insbesondere über Halteeinrichtungen verbunden werden können, wobei aus mehreren Platten mit Phasenwechselmaterial eine Kassettendecke aufgebaut wird.

11. Kühldecke bzw. Kühlsegel nach einem der Ansprüche 1 bis 10, **dadurch gekennzeichnet, dass** das Kühlmedium Wasser ist.

12. Kühldecke bzw. Kühlsegel nach einem der Ansprüche 1 bis 10, **dadurch gekennzeichnet, dass** das Kühlmedium Luft ist.

13. Kühldecke bzw. Kühlsegel nach Anspruch 12, **dadurch gekennzeichnet, dass** eine Zulufteinbringung in den Raum unterhalb der Decke bzw. des Segels gemäß einem Quellluftsystem in das Zuluftsystem integriert ist oder angeschlossen werden kann.

## Claims

1. A cooling ceiling and/or cooling sail comprising a suspended ceiling and/or sail planar structure (1) and comprising a cooling medium guide (2) above the planar structure (1), **characterised in that** a phase-changing material (4) is arranged on or in the planar structure (1), and **in that** a channel system (3, 6, 7) is provided, via which heat is transferred to and from the phase-changing material (4) through the cooling ceiling and/or cooling sail.

2. The cooling ceiling and/or cooling sail according to claim 1, **characterised in that** the phase-changing material (4) is arranged above the planar structure (1) in the intermediate spaces of a lower channel system (7) which lies on the planar structure (1).

3. The cooling ceiling and/or cooling sail according to claim 2, **characterised in that** an upper channel system (6) is arranged above the lower channel system (7) and diverts heat energy between the phase-changing material (4) and the cooling medium in the cooling medium guide (2).

4. The cooling ceiling and/or cooling sail according to claim 2 or 3, **characterised in that** the upper and/or lower channel system is constructed from channel-forming panel arrangements.

5. The cooling ceiling and/or cooling sail according to claim 1, **characterised in that** the phase-changing material (4) is arranged in the planar structure (1) in intermediate spaces of an inner channel system (3).

6. The cooling ceiling and/or cooling sail according to claim 5, **characterised in that** lower intermediate spaces of the inner channel system (3) accommodate the phase-changing material (4), while upper intermediate spaces comprise flow connections for the cooling medium in the cooling medium guide (2).

7. The cooling ceiling and/or cooling sail according to claim 5 or 6, **characterised in that** the planar structure (1) is embodied in a sandwich panel construction, wherein the phase-changing material (4) is accommodated on one side, while on the other side, flow channels are formed for the cooling medium in the cooling medium guide (2).

8. The cooling ceiling and/or cooling sail according to any one of claims 5 to 7, **characterised in that** aperture openings are arranged on the upper side of the planar structure (1).

9. The cooling ceiling and/or cooling sail according to any one of claims 5 to 8, **characterised in that** an upper channel system (6) is arranged above the planar structure (1) and diverts heat energy between the planar structure (1) and the cooling medium in the cooling medium guide (2).

10. The cooling ceiling and/or cooling sail according to any one of claims 1 to 9, **characterised in that** the cooling medium guide (2) and the arrangement for accommodating the phase-changing material (4) are separately provided and can in particular be connected via holding devices, wherein a panelled ceiling is constructed from a number of panels comprising phase-changing material.

11. The cooling ceiling and/or cooling sail according to any one of claims 1 to 10, **characterised in that** the cooling medium is water.

12. The cooling ceiling and/or cooling sail according to any one of claims 1 to 10, **characterised in that** the cooling medium is air.

13. The cooling ceiling and/or cooling sail according to claim 12, **characterised in that** a supply air inlet into the space below the ceiling and/or sail in accordance with a source air system is integrated into or can be connected into the supply air system.

## Revendications

1. Plafond réfrigérant ou voile réfrigérant avec une construction de plafond ou de voile plate suspendue (1) et avec un circuit de fluide réfrigérant (2) au-dessus de la construction plate (1), **caractérisé en ce qu'**une matière à changement de phase (4) est disposée sur ou dans la construction plate (1) et **en ce qu'**il est prévu un système de canaux (3, 6, 7), au moyen duquel le transfert de chaleur vers la matière à changement de phase (4) et à partir de celle-ci se produit à travers le plafond réfrigérant ou le voile réfrigérant.

2. Plafond réfrigérant ou voile réfrigérant selon la revendication 1, **caractérisé en ce que** la matière à changement de phase (4) est disposée au-dessus de la construction plate (1) dans les espaces intermédiaires d'un système de canaux inférieur (7), qui repose sur la construction plate (1).

3. Plafond réfrigérant ou voile réfrigérant selon la revendication 2, **caractérisé en ce qu'**un système de canaux supérieur (6) est disposé au-dessus du système de canaux inférieur (7), lequel dévie de l'énergie thermique entre la matière à changement de phase (4) et le fluide de refroidissement dans le circuit de fluide de refroidissement (2).

4. Plafond réfrigérant ou voile réfrigérant selon la revendication 2 ou 3, **caractérisé en ce que** le système de canaux supérieur et/ou inférieur est constitué d'agencements de plaques formant les canaux.

5. Plafond réfrigérant ou voile réfrigérant selon la revendication 1, **caractérisé en ce que** la matière à changement de phase (4) est disposée dans la construction plate (1) dans des espaces intermédiaires d'un système de canaux intérieur (3).

6. Plafond réfrigérant ou voile réfrigérant selon la revendication 5, **caractérisé en ce que** des espaces intermédiaires inférieurs du système de canaux intérieur (3) contiennent la matière à changement de phase (4), tandis que des espaces intermédiaires supérieurs présentent des raccordements d'écoulement pour le fluide de refroidissement dans le circuit de fluide de refroidissement (2).

7. Plafond réfrigérant ou voile réfrigérant selon la revendication 5 ou 6, **caractérisé en ce que** la construction plate (1) est réalisée à la façon de plaques en sandwich, dans lequel la matière à changement de phase (4) est logée sur un côté tandis que des canaux d'écoulement pour le fluide de refroidissement dans le circuit de fluide de refroidissement (2) sont formés sur l'autre côté.

8. Plafond réfrigérant ou voile réfrigérant selon l'une quelconque des revendications 5 à 7, **caractérisé en ce que** des orifices de passage sont disposés sur le côté supérieur de la construction plate (1).

9. Plafond réfrigérant ou voile réfrigérant selon l'une quelconque des revendications 5 à 8, **caractérisé en ce qu'**il se trouve, au-dessus de la construction plate (1), un système de canaux supérieur (6), qui dévie de l'énergie thermique entre la construction plate (1) et le fluide de refroidissement dans le circuit de fluide de refroidissement (2).

10. Plafond réfrigérant ou voile réfrigérant selon l'une quelconque des revendications 1 à 9, **caractérisé en ce que** le circuit de fluide de refroidissement (2) et l'agencement destiné à contenir la matière à changement de phase (4) sont prévus séparément et peuvent en particulier être assemblés par des dispositifs de maintien, dans lequel un plafond à cassettes est constitué de plusieurs plaques avec la matière à changement de phase.

11. Plafond réfrigérant ou voile réfrigérant selon l'une quelconque des revendications 1 à 10, **caractérisé en ce que** le fluide de refroidissement est l'eau.

12. Plafond réfrigérant ou voile réfrigérant selon l'une quelconque des revendications 1 à 10, **caractérisé en ce que** le fluide de refroidissement est l'air.

13. Plafond réfrigérant ou voile réfrigérant selon la revendication 12, **caractérisé en ce qu'**une entrée d'air dans l'espace sous le plafond ou le voile est intégrée ou peut être raccordée dans le système d'arrivée d'air, selon un système d'air de source.
